**Europäisches Patentamt**

**European Patent Office**

**Office européen des brevets**

(11) Veröffentlichungsnummer: **0 003 312**
A1

# (12) EUROPÄISCHE PATENTANMELDUNG

(21) Anmeldenummer: 79100123.3

(22) Anmeldetag: 16.01.79

(51) Int. Cl.²: **H 01 K 7/02**
F 21 V 9/04, A 61 C 13/14

(30) Priorität: 23.01.78 AT 451/78

(43) Veröffentlichungstag der Anmeldung:
08.08.79 Patentblatt 79/16

(84) Benannte Vertragsstaaten:
BE CH DE FR GB IT NL SE

(71) Anmelder: Epe Fabrik pharmazeutischer Präparate GmbH

D-8031 Seefeld / Obb(DE)

(72) Erfinder: Herold, Wolf-Dietrich
Seestrasse 16
D-8031 Hechendorf(DE)

(74) Vertreter: von Füner, Alexander, Dr. et al,
Patentanwälte Schiff, von Füner Strehl, Schübel-Hopf,
Ebbinghaus, Finck Mariahilfplatz 2 u. 3
D-8000 München 90(DE)

(54) Bestrahlungsgerät zum Aushärten von durch Strahlung härtbaren Massen.

(57) Ein Bestrahlungsgerät zum Aushärten von durch Strahlung härtbaren Massen umfaßt eine Lampe (16), deren Lichstrahlung sowohl den zum Aushärten erforderlichen UVA-Bereich oder UVA-nahen Spektralbereich als auch außerhalb dieser Nutzbereiche liegende Spektralteile enthält. Auf der ellipsoidförmigen Innenfläche eines die Lampe umgebenden Glaskörpers (18) ist ein Dünnschichtfilter (19) aufgetragen, das derart beschaffen ist, daß es nur die Nutzstrahlung reflektiert, die nicht gewünschten Spektralbereiche, insbesondere den größten Anteil des sichtbaren Lichts und die Wärmestrahlung, dagegen transmittiert. Bei Abfall der Lampenleistung durch Verklumpen des Glühfadens wird die Lampenversorgung periodisch unterbrochen, so daß ein Blinksignal zur Warnung des Benutzers erzeugt wird.

EP 0 003 312 A1

0003312

BESTRAHLUNGSGERÄT ZUM AUSHÄRTEN VON DURCH STRAHLUNG HÄRT-
BAREN MASSEN

Ein Bestrahlungsgerät nach dem Oberbegriff des Patentanspruchs 1 ist aus der deutschen Offenlegungsschrift Nr.
26 07 249 bekannt. Dort wird als Lichtquelle eine für
Kinoprojektoren übliche Lampe mit Aluminiumreflektor verwendet, wobei die gesamte Strahlung der Lampe, die sichtbare, UV- und IR-Spektralbereiche umfaßt, von dem Reflektor auf einen vor der Lampe liegenden Brennpunkt
fokussiert wird. In den Strahlungskegel zwischen Reflektor und Brennpunkt ist ein Filter eingebracht, das den
UVA-Spektralteil (320...400nm) reflektiert und die restliche Strahlung hindurchläßt. Bei dem Filter handelt es
sich um eine dünne Filterschicht, die auf eine unter $45^{\circ}$
zur optischen Achse des Strahlenkegels geneigte Trägerplatte aus Quarzglas aufgedampft ist. Der an diesem Filter
reflektierte Teil der Strahlung wird in einen Lichtleiter
eingekoppelt und durch diesen auf den zu bestrahlenden
Gegenstand gerichtet.

Das bekannte Gerät ist in erster Linie zur Aushärtung
von durch Ultraviolett-Strahlung polymerisierbaren Kunststoff-Zahnfüllmassen in der betreffenden Zahnkavität bestimmt. Bei dieser Anwendung gelangt nur die UVA-Strahlung
auf die Zahnfüllmasse, während sowohl die längerwellige
sichtbare und Wärme-Strahlung als auch die gesundheitsschädliche kürzerwellige Strahlung abgefiltert wird. Diese

0003312

nicht erwünschte Strahlung durchsetzt das Filter und trifft auf einen Hitzeschild, der durch Belüftung gekühlt wird.

Bei dem bekannten Gerät ist die Tatsache, daß die Nutzstrahlung aus der optischen Achse des von der Lampe erzeugten Strahlenkegels herausgespiegelt wird, erwünscht, weil dadurch gewährleistet wird, daß auch bei Beschädigung dieses Filters keine Strahlung in den unerwünschten Spektralbereichen durch den Lichtleiter und damit an das Bestrahlungsobjekt gelangt.

Das bekannte Bestrahlungsgerät ist jedoch mit einer Reihe gravierender Nachteile behaftet. So ist das Filter einer sehr hohen thermischen Belastung ausgesetzt, da es nur einen geringen Teil der gesamten Strahlungsleistung der Lampe reflektiert und von der übrigen transmittierten Leistung ein Teil durch die Trägerplatte des Filters absorbiert wird. Da ferner die Lampe intermittierend betrieben wird, tritt die thermische Belastung als das Filter besonders beanspruchende Wechselbelastung auf. Die ebene und dünne Glasplatte des Filters, die an sich schon leicht zerbrechlich ist, bildet daher eine ausgesprochene Schwachstelle des bekannten Geräts.

Um ferner das Gerät möglichst klein und handlich zu gestalten und auch die gefährdete Filterplatte möglichst klein zu machen, gleichzeitig aber den von der Lampe und dem Reflektor erzeugten Lichtkegel voll zu nutzen, ist es erforderlich, das Filter mindestens teilweise oval zu schleifen, was gerade wegen der Zerbrechlichkeit fertigungstechnische Schwierigkeiten verursacht und dementsprechend kostenaufwendig ist.

Aus Gründen, die aus der Verwendung einer handelsüblichen Lichtquelle mit genormter Reflektorform sowie wiederum aus dem Bestreben, das gesamte Gerät möglichst klein und handlich zu gestalten, resultieren, ist der Platz zwischen dem von der Lichtquelle erzeugten Strahlungskegel und dem Eintrittsende des Lichtleiters sehr begrenzt, so daß es schwierig ist, zwischen dem Filter

— 3 —

0003312

und dem Lichtleiter weitere Filter zu haltern, ohne in den Lichtkegel einzugreifen. Derartige weitere Filter können in Abhängigkeit vom Frequenzgang des Dünnschichtfilters erforderlich sein.

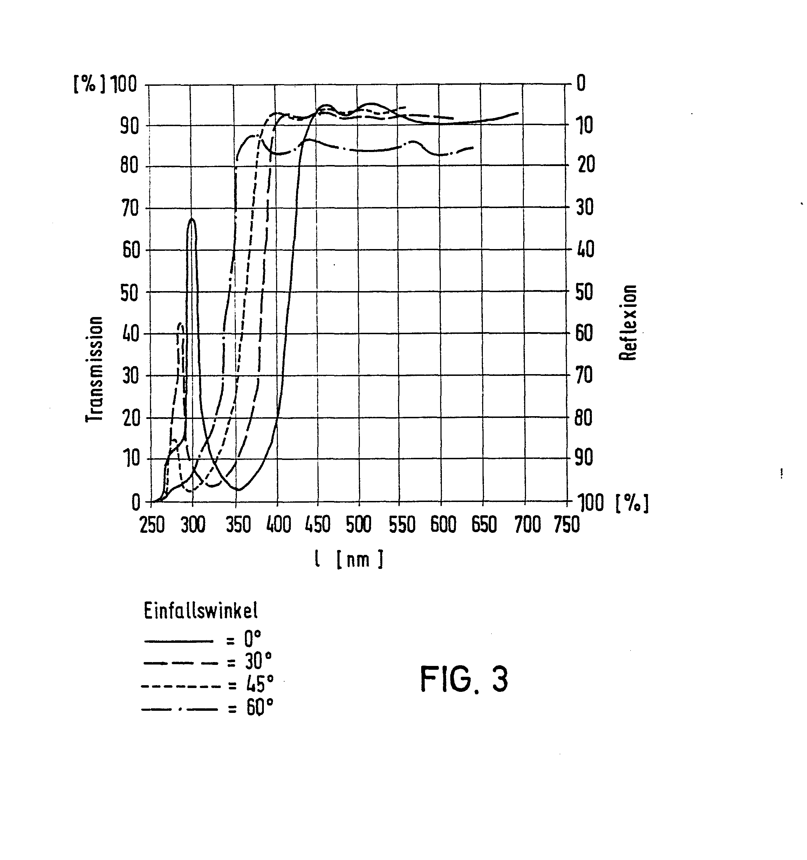

Ein weiteres, möglicherweise das größte, Problem bei der bekannten Anordnung resultiert aus der Tatsache, daß bei dem verwendeten Dünnschichtfilter die Filterkurve vom Einfallswinkel des Lichtstrahls abhängt. Wird das Dünnschichtfilter derart eingestellt, daß bei dem mittleren Einfallswinkel von $45^O$ maximale Reflexion bei einer Wellenlänge von beispielsweise 350 nm auftritt, so verschiebt sich dieses Maximum bei größeren Einfallswinkeln zu kleineren Wellenlängen, wie dies in dem Diagramm der Figur 3 gezeigt ist, und bei kleineren Einfallswinkeln zu größeren Wellenlängen. Derartige größere und kleinere Einfallswinkel sind aber bei der Geometrie des bekannten Gerätes nicht zu vermeiden. In der Tat wird mit einer Abweichung von $\pm 30^O$ gegenüber dem mittleren Einfallswinkel von $45^O$ gerechnet. Dies führt für den äußeren Teil des Strahlenbündels zu einer wesentlichen Verschiebung der Filterkurven, woraus eine schlechtere Reflexion des erwünschten Spetralbereichs und eine verstärkte Reflexion des unerwünschten und zum Teil sogar gefährlichen Spektralbereichs resultiert, der durch zusätzliche Filter absorbiert werden muß. Dabei ist auch noch zu berücksichtigen, daß die achsnahen Strahlen, die unter dem günstigsten Winkel von $45^O$ einfallen würden, wegen des herstellungsbedingten Pumpstutzens an der Spitze des Lampenkolbens sowie wegen des durch den Einbau der Lampe selbst bedingten Fehlens des mittleren Reflektorteils gar nicht auftreten.

Berücksichtigt man weiterhin unvermeidbare Toleranzen beim Einbau des Filters in das Gehäuse in der unter $45^O$ geneigten Lage, so ist mit weiteren Verschlechterungen der Filterwirkung zu rechnen. Dabei muß die Halterung den oben erwähnten thermischen Belastungen des Filters durch entsprechendes Spiel Rechnung tragen.

0003312

Ferner bildet das Filter zusammen mit dem Reflektor und dem Eintrittsende des Lichtleiters einen nach außen großenteils abgeschlossenen Raum, in dem sich die von der Lichtquelle erzeugte Wärme staut und zu einer weiteren Belastung des Reflexionsfilters sowie weiterer etwa am Eingang des Lichtleiters vorgesehener Absorptionsfilter führt.

In Anbetracht dieses Standes der Technik kann die der Erfindung zugrunde liegende Aufgabe darin gesehen werden, ein Bestrahlungsgerät zu schaffen, das die genannten Nachteile mindestens teilweise vermeidet und insbesondere eine genauere Filterung und damit eine bessere Ausnutzung des von der Lichtquelle erzeugten Strahlungsteils im gewünschten Spektralbereich bei gleichzeitig einfacherem Aufbau des Gerätes und verringerter thermischer Belastung der verschiedenen Bauelemente gestattet. Dabei soll jedoch die günstige Eigenschaft des bekannten Geräts, daß bei Beschädigung des Filters keine unerwünschte Strahlung durch den Lichtleiter tritt, im wesentlichen erhalten bleiben.

Die Lösung dieser Aufgabe ist im kennzeichnenden Teil des Patentanspruchs 1 angegeben.

Bei dem erfindungsgemäßen Bestrahlungsgerät übernimmt der Reflektor selbst bereits die Filterung und wirkt somit als "selektiver Reflektor". Dadurch wird das beim Stand der Technik erforderliche zusätzliche Filterelement eingespart, und die damit verbundenen Justiertoleranzen fallen weg. Bei dem erfindungsgemäßen Gerät tritt die nicht gewünschte Strahlung unmittelbar durch den Trägerkörper des Reflektors hindurch, wobei die Wärme durch entsprechende Kühleinrichtungen ohne Schwierigkeiten abgeführt werden kann. Von der Vorderseite des Reflektors wird nur Strahlung in dem gewünschten vorgegebenen Wellenlängenbereich abgestrahlt, die beim Betrieb im UVA-Bereich kalt ist, so daß etwa erforderliche zusätzliche Absorptionsfilter und auch der Lichtleiter selbst keiner thermischen Belastung ausgesetzt sind. Hat der Reflektor die übliche Ellipsoidform, so ändert sich der Einfallswinkel der Strahlung über die Filterfläche nur geringfügig, so daß eine wohldefinierte Filterkurve erreicht wird und auch die Ränder des Strahlenbündels praktisch keine unerwünschten oder gar gefährlichen Spektralteile führen.

Für Kino- und Diaprojektoren ist beispielsweise aus der deutschen Offenlegungsschrift 1 572 759 oder der österreichischen Patentschrift 215 180 ein Reflektor bekannt, der im wesentlichen nur sichtbares Licht reflektiert und Wärmestrahlung transmittiert. Wird ein solcher Reflektor jedoch in einem Bestrahlungsgerät eingesetzt, das für Dentalzwecke im UVA-Bereich oder UVA-nahen sichtbaren Bereich arbeiten soll, so ist im reflektierten Lichtstrom mindestens ein weiteres Filter erforderlich, um diesen gewünschten Spektralbereich von dem übrigen, sichtbaren Licht zu trennen. Wird dieses weitere Filter als Reflexionsfilter gestaltet, so ergeben sich wiederum die meisten der oben abgehandelten Nachteile, zumal dabei eine Auslenkung aus der optischen Achse unvermeidbar ist. Wird das weitere Filter in Form eines Absorptionsfilters eingesetzt, so ergibt sich der zusätzliche Nachteil, daß dieses Filter einer besonders hohen Wärmebeanspruchung und der daraus resultierenden Bruchgefahr ausgesetzt ist. Der Ausfall dieses Filters zieht den weiteren Nachteil nach sich, daß dann das sichtbare Licht ungehindert durch den Lichtleiter an den Bestrahlungsort übertragen wird, wo es in der Regel stört.

Eine vorteilhafte Weiterbildung der Erfindung nach Anspruch 2 führt nicht nur zu einem besonders handlichen Gerät sondern gewährleistet auch, daß auch der Einbau etwa zusätzlicher Filter vor dem Lichtleiter keinen räumlichen Beschränkungen ausgesetzt ist. Trotz dieser koaxialen Anordnung des Lichtleiters bezüglich der optischen Achse besteht jedoch keine Gefahr, daß bei Beschädigung des Dünnschichtfilters ungefilteres Licht schädigend an

0003312

das Bestrahlungsobjekt gelangen, da die direkte, unreflektierte Abstrahlung von der Lampe wegen des schon erwähnten Pumpstutzens am Lampenkolben grundsätzlich minimal ist. Die koaxiale Anordnung von Lichtleiter und Strahlungsquelle gestattet es ferner, an dem Gerät einen Handgriff so anzuordnen, wie es der arbeitsphysiologisch günstigsten Handhabung des Gerätes entspricht. Eine besonders zweckmäßige Ausgestaltung in dieser Hinsicht ist in den Ansprüche 8 und 9 gekennzeichnet. Gemäß Anspruch 10 kann dabei ein zur Kühlung der Lampe dienendes Gebläse in dem Handgriff untergebracht sein.

Bei der Weiterbildung der Erfindung nach den Ansprüchen 12 bis 14 ergibt sich der Vorteil,daß bei einem Absinken der Lampenleistung, die sich bei Verklumpen des Glühfadens einstellt und an der am Lichtleiter austretenden Strahlung nicht zu erkennen ist, durch periodische Unterbrechung der Strahlung ein Blinksignal erzeugt wird, das den Benutzer eindeutig auf die Fehlfunktion der Lampe hinweist.

Ein bevorzugtes Ausführungsbeispiel der Erfindung wird im folgenden anhand der Zeichnungen näher erläutert. In den Zeichnungen zeigen

Figur 1    einen schematischen Längsschnitt durch das Bestrahlungsgerät;

Figur 2    ein Detail der Figur 1 zur Erläuterung des Strahlengangs;

Figur 3,   auf die oben schon Bezug genommen wurde, ein Diagramm, in dem Filterkurven eines Dünnschichtfilters mit dem Einfallswinkel als Parameter dargestellt sind; und

Figur 4    ein Blockschaltbild eines Teils eines zugehörigen Steuergerätes.

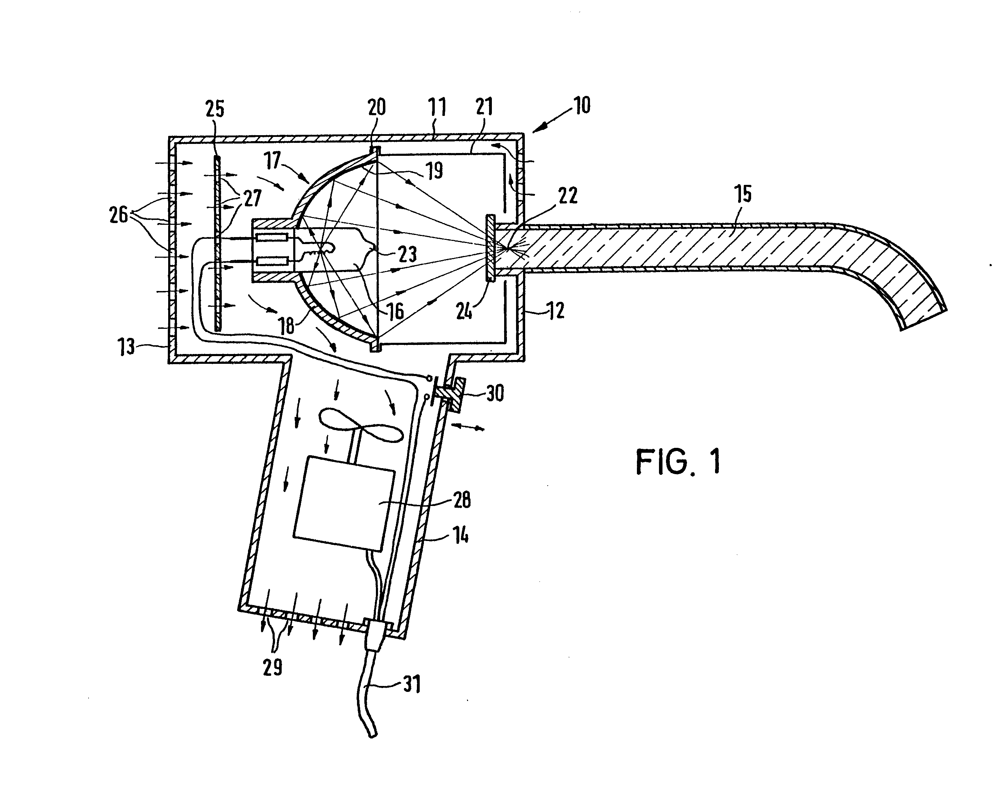

Das in Figur 1 gezeigte Bestrahlungsgerät umfaßt ein Gehäuse 10, beispielsweise aus Kunststoff, mit einem z.B. zylindrischen Mantel 11, einer Vorderwand 12 und einer Rückwand 13. Am Mantel 11 ist ein Handgriff 14 angeformt, der ebenfalls etwa zylinderförmig ist und dessen Achse unter einem für die Handhabung günstigen Winkel von beispielsweise etwa 80° zur Gehäuseachse verläuft. Die Vorderwand 12 des Gehäuses 10 durchsetzt ein starrer Lichtleiter 15, dessen Eintrittsende in das Gehäuse hineinragt, während sein Austrittsende abgewinkelt ist.

Im Innern des Gehäuses 10 ist in der Gehäuseachse eine Lampe 16 angeordnet, die in einen Reflektor 17 eingekittet ist. Der Reflektor 17 umfaßt einen Trägerkörper 18 aus technischem Glas für schnell wechselnde Temperaturen, insbesondere Borosilikatglas, dessen ellipsoidförmige Innenfläche mit einem Dünnschichtfilter 19 versehen ist. Der Reflektor arbeitet also entsprechend der Reflexions/ Transmissions-Charakteristik als "selektiver Reflektor". Bei dem Dünnschichtfilter 19 handelt es sich beispielsweise um eine aufgedampfte Mehrfachbeschichtung aus $TiO_2$ mit einem Brechungsindex in der Größenordnung von 2,4. Der Reflektor 17 ist mit einem an der Außenkante des Trägerkörpers 18 versehenen Flansch 20 über eine Halterung 21 in dem Gehäuse 10 befestigt.

Bei der Lampe 16 kann es sich um eine handelsübliche Niedervoltlampe mit einem Wolfram-Faden und einer Halogen-Füllung handeln, die zur Erzeugung eines ausreichenden Anteils an kurzwelliger Strahlung mit entsprechend hoher Spannung betrieben wird. Es sind jedoch auch andere Lampen, beispielsweise Gasentladungslampen verwendbar, solange die von ihnen emittierte Strahlung den gewünschten Spektralbereich enthält. Bei dem Trägerkörper 18 des Reflektors kann es sich ebenso wie bei der Lampe 16 um ein übliches Bauelement handeln. Die verschiedenen optischen Teile des Gerätes sind so angeordnet, daß sich der Faden der Lampe 16 im einen Brennpunkt des von der Reflektorfläche gebildeten Rotationsellipsoids befindet, während ihr anderer Brennpunkt 22 nahe dem Einlaßende innerhalb des Lichtleiters 15 liegt. Die beiden Brennpunkte definieren die optische Achse des Reflektors 17, die mit der optischen Achse des Lichtleiters 15 und mit der Gehäuseachse zusammenfällt.

Das Dünnschichtfilter 19 ist so beschaffen, daß es den gewünschten Spektralteil der von der Lampe 16 emittierten Strahlung vorzugsweise reflektiert und die übrigen Spektralteile vorzugsweise hindurchläßt. Da das Gerät in erster Linie zur Polymerisation von in Zahnkavitäten eingebrachten Kunststoff-Zahnfüllmassen bestimmt ist, ist das Dünnschichtfilter 19 derart beschaffen, daß sein Reflexionsmaximum im UVA-Bereich (ca. 320 nm bis ca. 400 nm) und/oder im UVA-nahen sichtbaren Spektralbereich (ca. 400 nm bis ca. 500 nm) liegt. Infolge der Gestaltung und Anordnung des Fadens innerhalb der Lampe 16 tritt der Hauptteil der Strahlung in von der optischen Achse abweichenden Richtungen aus, trifft daher auf den Reflektor 17 und wird dort gefiltert. Der geringfügige in Richtung der optischen Achse nach vorne emittierte Teil der Strahlung wird durch den herstellungsbedingten Pumpstutzen 23 an der Spitze des Lampenkolbens gestreut, so daß praktisch keine Strahlung unmittelbar und ungefiltert auf den Lichtleiter 15 trifft. Zur weiteren Abfilterung unerwünschter Spektralbereiche ist außerdem am Eintrittsende des Lichtleiters 15 ein entsprechend gewähltes Absorptionsfilter 24 angeordnet.

Die von dem Dünnschichtfilter 19 hindurchgelassene Strahlung, bei der es sich zu einem großen Teil um Wärmestrahlung handelt, fällt auf ein hinter dem Reflektor angeordnetes Wärmeleitelement 25, das gleichzeitig das Kunststoffgehäuse 10 gegen übermäßige Erwärmung schützt und verhindert, daß Strahlung durch die in der Rückwand 13 des Gehäuses 10 vorgesehenen Lüftungslöcher 26 austritt. Zur Verbesserung der Luftzirkulation ist das Wärmeleitelement 25 ebenfalls mit Lüftungslöchern 27 versehen, die gegenüber den Lüftungslöchern 26 versetzt sind.

Der Innenraum des Handgriffs 14 steht mit dem Innenraum des Gehäuses 10 in Verbindung, und in dem Handgriff 14 ist ein Gebläse 28 untergebracht, das für eine Abfuhr der hinter dem Reflektor 17 erzeugten Wärme sorgt. Das Gebläse 28 saugt dabei Frischluft durch die Lüftungslöcher 26 und 27 gegen das Wärmeleitelement 25 und die Rückseite des Reflektors 17 und führt die erwärmte Luft durch am unteren Ende des Handgriffs 14 vorgesehene Entlüftungslöcher 29 nach außen ab.

Am Handgriff 14 ist ferner ein mit dem Zeigefinger betätigbarer Schalter 30 zum Einschalten der Lampe 16 vorgesehen. Die Stromversorgung für die Lampe 16 und das Gebläse 28 erfolgt über ein am unteren Ende des Handgriffs austretendes Kabel 31, das zu einem Steuergerät führt. Ein Teil der Schaltung dieses Steuergeräts ist in Figur 4 gezeigt.

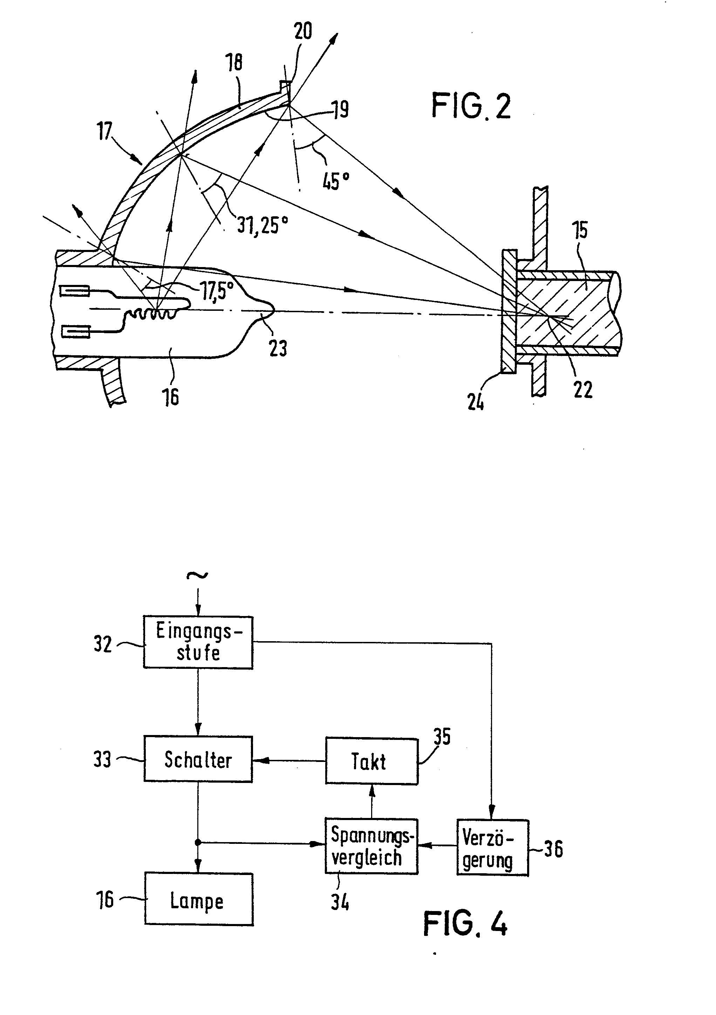

Wie der vergrößerten Detaildarstellung der Figur 2 zu entnehmen, variiert der Einfallswinkel der von der Lampe 16 ausgehenden Lichtstrahlen über die Mantellinie des Reflektors 17 zwischen etwa $17,5^{\circ}$ am innersten lampennahen Teil des Reflektors und etwa $45^{\circ}$ an der Außenkante des Reflektors. Stellt man das Dünnschichtfilter 19 derart ein, daß das Reflexionsmaximum bei einem Einfallswinkel von $31,25^{\circ}$, d.h. dem arithmetischen Mittelwert aus den beiden Grenzwinkeln, in den gewünschten Spektralbereich fällt, so ergeben die verhältnismäßig geringfügigen Abweichungen des Einfallswinkels von $\pm\,13,75^{\circ}$ nur eine entsprechend geringfügige Verbreiterung der Filterkurve, was sich anhand des Diagramms nach Figur 3 leicht bestätigen läßt.

Gemäß den in Figur 4 gezeigten Blockschaltbild wird die Lampe 16 vom Netz über eine Schaltung betrieben, die eine Eingangsstufe 32 und eine zwischen dieser und der Lampe liegende steuerbare Schalteinrichtung 33 umfaßt. In der Eingangsstufe 32 wird die Netzleistung derart umgeformt, daß im Konstantstrombetrieb an der Lampe 16 normalerweise eine Spannung von 13V abfällt. Die Lampenspannung wird in einem Spannungsvergleicher 34 mit einem vorgegebenen Wert von beispielsweise 11,5 V verglichen. Sinkt die Lampenspannung unter diesen Wert, was insbesondere nach

0003312

längerem Gebrauch der Lampe durch Verklumpen und damit Verkürzung des Wolfram-Fadens auftreten kann, so steuert der Spannungsvergleicher 34 einen Taktgeber 35 an, der die Schalteinrichtung 33 periodisch mit einem Intervall von beispielsweise 1 s betätigt. Dadurch wird der am vorderen Ende des Lichtleiters 15 austretende Lichtstrahl periodisch unterbrochen, so daß dem Benutzer in Form dieses nicht zu übersehenden Blinksignals eindeutig angezeigt wird, daß die Lampe nicht mehr ordnungsgemäß arbeitet und ausgewechselt werden muß

Ohne dieses Blinksignal wäre eine durch teilweisen Kurzschluß des Glühfadens nur um einen gewissen Teil verringerte Strahlungsleistung nicht zu erkennen, obwohl sie für ein einwandfreies Aushärten des zu bestrahlenden Materials nicht mehr ausreicht.

Die die Lampenspannung vom Zeitpunkt des Einschaltens an nicht abrupt sondern innerhalb einer Zeitspanne von etwa 0,8 bis 4 s ansteigt, wird der Spannungsvergleicher 34 von einem Verzögerungsglied 36 eingeschaltet, das beim Einschalten der Lampe aus der Eingangsstufe 32 angesteuert wird und eine Verzögerungszeit von 2 bis 4 s aufweist.

0003312

PATENTANSPRÜCHE

1.    Bestrahlungsgerät zum Aushärten von durch Strahlung eines schmalen, selektierten, gegebenenfalls den UVA-Bereich umfassenden Wellenlängenbereichs härtbaren Massen, mit einer Lampe zur Erzeugung einer den selektierten Wellenbereich enthaltenden Strahlung, mit einem die Lampe teilweise umgebenden Reflektor, der Strahlung der Lampe auf das Eintrittsende eines Lichtleiters fokussiert, sowie mit einem im Lichtstrom angeordneten Dünnschichtfilter, das Strahlung des selektierten Wellenlängenbereichs reflektiert und Strahlung außerhalb des selektierten Wellenbereichs hindurchläßt, dadurch g e k e n n - z e i c h n e t , daß der Reflektor (17) von dem auf einen Trägerkörper (18) aus strahlungsdurchlässigem Material aufgetragenen Dünnschichtfilter (19) gebildet ist und daß der selektierte Wellenlängenbereich der UVA-Bereich und/ oder der UVA-nahe sichtbare Bereich ist.

2.    Gerät nach Anspruch 1, dadurch g e k e n n - z e i c h n e t , daß der Lichtleiter (15) an seinem Eintrittsende koaxial zu der von Lampe (16) und Brennpunkt (22) gebildeten Achse verläuft.

3.    Gerät nach Anspruch 1 oder 2, dadurch g e - k e n n z e i c h n e t , daß der Reflektor-Trägerkörper (18) aus wärmebeständigem Glas besteht.

4.    Bestrahlungsgerät nach einem der Ansprüche 1 bis 3, dadurch  g e k e n n z e i c h n e t ,  daß die das Dünnschichtfilter (19) tragende Fläche des Reflektors (17) ein Rotationsellipsoid ist.

5.    Gerät nach einem der Ansprüche 1 bis 4, dadurch  g e k e n n z e i c h n e t ,  daß die Lampe (16) eine Wolfram-Halogen-Niedervoltlampe ist.

6.    Gerät nach einem der Ansprüche 1 bis 5, dadurch  g e k e n n z e i c h n e t ,  daß zwischen der Lampe (16) und dem Eintrittsende des Lichtleiters (15) eine weitere Filtereinrichtung (24) angeordnet ist.

7.    Gerät nach Anspruch 6, dadurch  g e k e n n - z e i c h n e t ,  daß die weitere Filtereinrichtung ein am Eintrittsende des Lichtleiters (15) angeordnetes Filter (24) umfaßt.

8.    Gerät nach einem der vorhergehenden Ansprüche, dadurch  g e k e n n z e i c h n e t ,  daß Lampe (16), Reflektor (17) und Lichtleiter (15) von einem Gehäuse (10) getragen sind, und daß an dem Gehäuse ein Handgriff (14) angebracht ist, der gegenüber der Senkrechten zu der von dem Reflektor (17) definierten optischen Achse geneigt ist.

9.    Gerät nach Anspruch 8, dadurch  g e k e n n - z e i c h n e t ,  daß der Neigungswinkel etwa 10$^{\circ}$ beträgt.

10.    Gerät nach Anspruch 8 oder 9, dadurch  g e - k e n n z e i c h n e t ,  daß in dem Handgriff (14) ein Gebläse (28) angeordnet ist, und daß der Innenraum des Handgriffs mit dem Raum hinter dem Reflektor (17) in Verbindung steht.

11.    Gerät nach einem der Ansprüche 8 bis 10, dadurch  g e k e n n z e i c h n e t ,  daß hinter dem Reflektor (17) innerhalb des Gehäuses (10) ein Wärmeleitelement (25) angeordnet ist, das gleichzeitig als Blendschutz dient.

12.    Gerät nach einem der Ansprüche 1 bis 11, dadurch  g e k e n n z e i c h n e t ,  daß die Lampe (16) mit einer Überwachungsschaltung (33, 34, 35) verbunden ist, die bei Absinken der Lampenleistung die Versorgung der Lampe (16) periodisch unterbricht.

13.    Gerät nach Anspruch 12, dadurch  g e k e n n - z e i c h n e t ,  daß die Lampe (16) im Konstantstrombetrieb arbeitet, und daß die Überwachungsschaltung einen die Lampenspannung mit einem Schwellenwert vergleichenden Spannungsvergleicher (34) umfaßt, dessen Ausgangssignal einen Taktgeber (35) ansteuert, der mit einer in der Lampenversorgung vorgesehenen Schalteinrichtung (33) verbunden ist.

- 4 -                    0003312

14.      Gerät nach Anspruch 12 oder 13, dadurch  g e -
k e n n z e i c h n e t ,  daß die Überwachungsschaltung
(33, 34, 35) durch ein mit dem Einschalten der Lampe (16)
ansteuerbares Verzögerungsglied (16) einschaltbar ist.


PS/Ug

FIG. 1

FIG.2

FIG.4

0003312

FIG. 3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>GB - A - 923 244</u> (RAYMOND LA VERNE STRAWICK) <br> * Seite 4, Zeilen 43-87 * | 1,3,5 |
| | <u>NL - A - 76 04504</u> (N.V. PHILIPS GLOEILAMPENFABRIEKEN) <br> * Seite 3, Zeile 28 bis Seite 4, Zeile 30 * | 1,4,5 |
| | <u>FR - A - 2 354 510</u> (UNION CARBIDE CORPORATION) <br> * Seite 4, Zeilen 16-28 * | 1 |
| | <u>DE - A - 2 507 601</u> (DENTSPLY INTERNATIONAL INC.) <br> * Gesamt * | 1,8 |
| A | <u>US - A - 3 597 647</u> (MICHAEL L. RISHTON) <br> * Gesamt * | 1 |
| DA | <u>DE - A - 2 607 249</u> (NATH GUENTHER) <br> * Gesamt * | 1 |

**KLASSIFIKATION DER ANMELDUNG (Int.Cl.²)**

H 01 K 7/02
F 21 V 9/04
A 61 C 13/14

**RECHERCHIERTE SACHGEBIETE (Int. Cl.²)**

A 61 C 13/14
H 01 K 7/02
H 21 V 9/04
H 01 K 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-04-1979 | TREVETIN |

EPA form 1503.1   06.78